# EUROPEAN PATENT APPLICATION

(11) **EP 1 097 849 A1**
(43) Date of publication of application: **09.05.2001**
(21) Application number: 99203734.1
(22) Date of filing: 08.11.1999
(51) Int. Cl.: B60S 1/38, B60S 1/52

(54) **Wiper assembly**

(71) Applicant: SOLVAY & Cie (Société Anonyme), B-1050 Bruxelles (BE)
(72) Inventor: Wolfgang, Frank, 83052 Bruckmühl (DE)
(74) Representative: Dufrasne, Eugène

(57) **Abstract**

A wiper assembly capable of removing liquid from a solid surface (10), suitable for cleaning a windscreen of an automotive vehicle, said wiper assembly comprising a movable wiper blade (6), a wiper arm (9), said wiper assembly further comprising at least a fluid dispensing device (8).

## Description

The present invention concerns a wiper assembly for cleaning a solid surface, by means of a fluid, suitable for cleaning a windscreen of an automotive vehicle.

Wiper assemblies are used to clean solid surfaces on which impurities contained in an atmosphere become deposited. The principle of this cleaning process consists in moistening of the surface with a fluid and to move pivotally a wiper blade across the surface to remove the fluid containing impurities. Examples of commercialised wiper assemblies include, amongst others, windscreen wiper assemblies for automotive vehicles such as cars or trucks and wiper assemblies for cleaning the glass screen of headlights. Criteria of evaluation of wiper assemblies include good moistening of the surface necessary to avoid scratching and low fluid consumption.

In US 3793670 a windshield washer assembly is proposed, in which a stream of fluid is projected against a baffle and dispersed into a broad spray directed toward the windshield. When this known assembly is used, fluid consumption may be high due to air currents carrying away a part of the fluid from the zones of the windshield across which the wiper blade moves. With regard to this known windshield washer assembly, it was desirable to find a wiper assembly which ensures good moistening of the surface at low fluid consumption and is easy to manufacture.

The invention intends to solve these problems.

The invention concerns a wiper assembly capable of removing liquid from a solid surface, suitable for cleaning a windscreen of an automotive vehicle, said wiper assembly comprising a movable wiper blade, said wiper blade being attached to a wiper arm, connected to driving means, said wiper assembly further comprising at least a fluid dispensing device comprising
(a) at least a means for projecting a beam of fluid at an angle essentially out of the plane defined by the two end points of the wiper blade and the outlet of said means for projecting, and
(b) at least a means for deflecting and spreading the beam in a direction substantially perpendicular to the initial direction of the beam so as to be able to spread said beam, during operation, towards an area of the solid
   surface extending approximately parallel to the wiper blade,
   said fluid dispensing device being attached to the wiper arm or the wiper blade.

Surprisingly, it has been found that the wiper assembly according to the invention, which directs essentially all of the fluid on a short pathway substantially parallel to the wiper blade towards the surface to be cleaned, enables for reliable moistening of the surface at low cleaning liquid consumption.

In the wiper assembly according to the invention, the driving means may consist in a known system capable to bring about a pivotal or translational movement of the wiper assembly across a substantially plane surface. Known wiper blades may be used in the wiper assembly according to the invention. Preferably the part of the wiper blade which comes into contact with the solid surface during operation is made from an elastomeric material such as rubber. The shape of the wiper blade may be straight or curved with regard to its end points. The wiper blade is often supported on a rearside, preferably made from metal or rigid polymeric material, which conveys rigidity to the wiper blade and establishes the connection to the wiper arm. The solid surface to be cleaned is generally substantially planar. The surface is often transparent and may be made for example from materials such as glass or rigid polymer such as for example polycarbonates.

In the wiper assembly of the invention, the means for projecting a fluid generally comprises an injection nozzle connected to a fluid pump. Suitable fluid pumps are known and supply fluid at a pressure sufficient to project a beam to moisten the surface when the beam is directed towards it by the directing means. The connection between the pump and the injection nozzle may be brought about by known techniques. A flexible tube connection, made, for example, from elastomeric material is preferred. The injection nozzle comprises at least one outlet. The injection nozzle is generally shaped to project a homogeneous, non dispersed beam in order to allow for precise deflection of the beam by the means for deflecting.

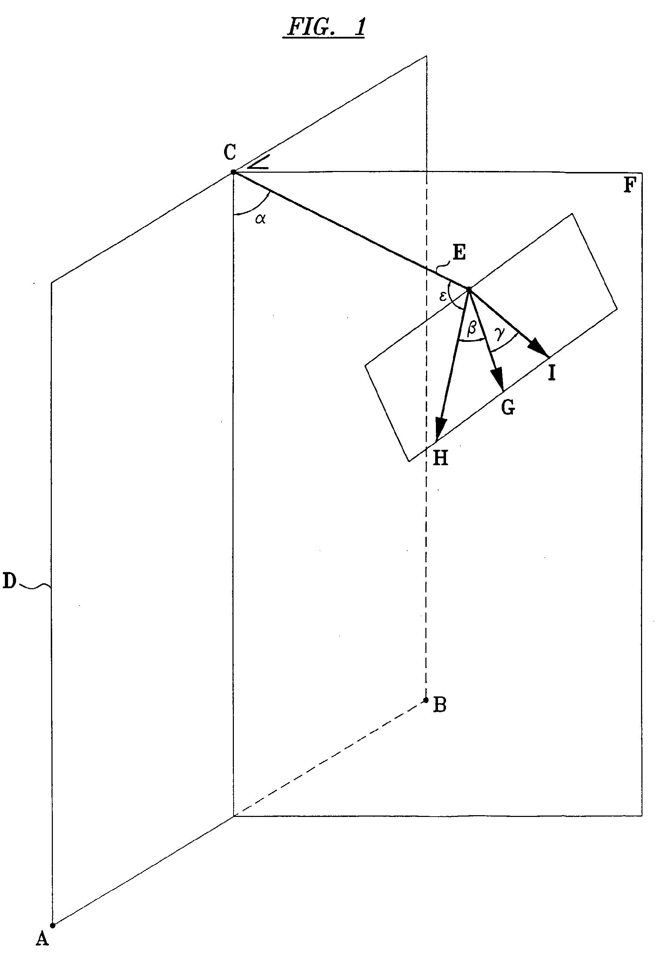

The Figure 1 depicts the definition of the angle a. The points A and B stand for the end points of the wiper blade. The point C stands for the outlet of the means for projecting. The angle of the beam E projected from the outlet C of the means for projecting is the angle α between the beam E and the plane D defined by the points A, B and C. The angle α lies in a second plane F, perpendicular to the plane D.

The angle α is generally at least about 10°. Often the angle is at least 30°. An angle of at least 45° is particularly suitable. An angle of at least 60° is preferred. The angle is generally at most about 170°. Often the angle is at most about 150°. An angle of about at most 135° is particularly suitable. An angle of at most 60° is preferred. An angle from about 75 to about 115° is specially preferred. An angle of about 90° is most preferred.

In the wiper assembly of the invention, the means for projecting a beam of fluid and the means for deflecting the beam are attached to the wiper blade or on the wiper arm or incorporated into the wiper blade or into the wiper arm. The means for projecting a beam of fluid and the means for deflecting the beam may be attached to the wiper blade or to the wiper arm by known techniques. In a specific embodiment, the means for deflecting is attached to the means for projecting and the means for projecting is attached to the wiper blade or the wiper arm.

It is preferred to incorporate the means for projecting a beam of fluid into the rearside of the wiper blade or into the wiper arm. The incorporation of the means for projecting the fluid into the rearside of the wiper blade or into the wiper arm has aerodynamic advantages as the wiper arm and backing will act as a shield with regard to the beam projected. The incorporation may also facilitate mounting of the wiper assembly and protect the means for projecting, which may be made from relatively fragile material, against mechanical damage. Suitably the means for projecting is attached to the wiper blade or to the wiper arm or incorporated into the wiper blade or into the wiper arm in such a way that the outlet points in the angle described above.

In a specific embodiment, at least one means for projecting is incorporated into a rearside of the wiperblade next to the point of attachment of said rearside to the wiper arm and a means for deflecting is attached to the rearside so as to be able to deflect a beam coming from the incorporated means for projecting during operation.

In a further specific embodiment, the wiper assembly of the invention comprises more than one fluid dispensing device.

The means for deflecting usually brings about a change of the initial direction of the beam E of at least 45°. Often the change of direction is at least 60°. Preferably, the change of direction is at least 75°. Changes of direction of about 90° give excellent results. A particular case illustrating the change of direction is given in Figure 1, where the angle ε enclosed between E and G and said angle lying in the plane F corresponds to the change of direction.

The means for deflecting comprises at least one deflecting face. The deflector may be made, for example from polymeric material or metal. Preferably the deflector is a bent piece of metal.

In a preferred embodiment, the means for deflecting comprises at least two deflecting faces. Most preferably, it comprises two deflecting faces. The angle δ between two deflecting faces is generally at least about 80°. Preferably, the angle is from at least about 90°. Generally the angle is at most about 150°. Preferably the angle is at most about 140°.

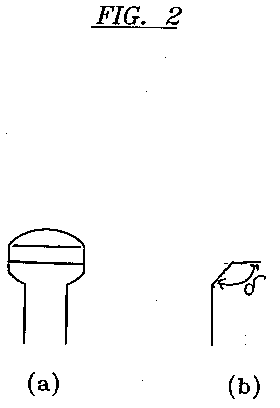

The figure 2 (a) and 2 (b) show a preferred means for deflecting usable in the wiper assembly of the invention. Figure 2(a) shows the front view on the means for deflecting. Figure 2 (b) shows the side view on the means for deflecting. This means for deflecting is a substantially round plate, preferably made from metal, having two deflecting faces forming an angle δ of about 110°.

The preferred distance between the outlet and the point where the means for deflecting said beam towards the solid surface is hit by said beam, depends on the pump pressure and the desired distance between the wiper blade and the zone of the surface to be moistened by the fluid. Generally, the distance between the outlet and the point where the means for deflecting said beam towards the solid surface is hit by said beam is at least 1 mm. Preferably, the distance is at least 2 mm. Excellent results are obtained at a distance of at least 5 mm. Generally, the distance between the outlet and the point where the means for deflecting said beam towards the solid surface is hit by said beam is at most 50 mm. Preferably, the distance is at most 30 mm. Excellent results are obtained at a distance of at most 25 mm.

The means for deflecting is attached to the wiper blade or to the wiper arm or to the means for projecting so as to be able to direct the beam of fluid coming from the means for projecting towards the surface. The means for deflecting may be fixed by known techniques. When the means for deflecting is made from metal, welding of said piece to a metal rearside of the wiper blade or to a metal wiper arm or to the means for projecting made from metal is preferred.

Good results are obtained with a geometry, in which the beam is dispersed essentially in three directions. Referring to Figure 1, the first direction G is in the plane F and is substantially perpendicular to the initial direction of the beam E. The second and third directions H and I are out of the plane F. The dispersion angles β et γ are generally at least 10° relative to the plane F. Often the angles are at least 30°. Preferably the angles are at least 45°. In a specific embodiment, the second and third directions are substantially symmetrical to the plane F, so that β is substantially equal to γ.

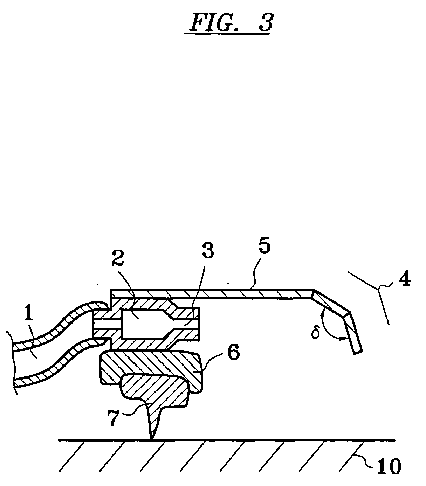

The figure 3 shows a partial view of a particular wiper assembly according to the invention showing a fluid dispensing device, comprising the elements (2), (3), (4) and (5) said fluid dispensing device being connected to a fluid tube (1) and being attached to the rearside (6) of a wiper blade (7). The means for projecting comprises an injection nozzle (2) having an outlet (3) and being connected to a fluid tube (1). The means for deflecting is a deflector according to Figure 2 (4) attached to the injection nozzle through an attachment structure (5).

The number of fluid dispensing devices to be preferably used depends on the length of the wiper blade, the geometry of the means for deflecting the beam and the pump pressure. Very low cleaning liquid consumption may be achieved, as the pathway of the fluid becomes shorter in comparison to wiper assemblies comprising one device.

The fluid dispensing device may further comprise a heating element known as such.

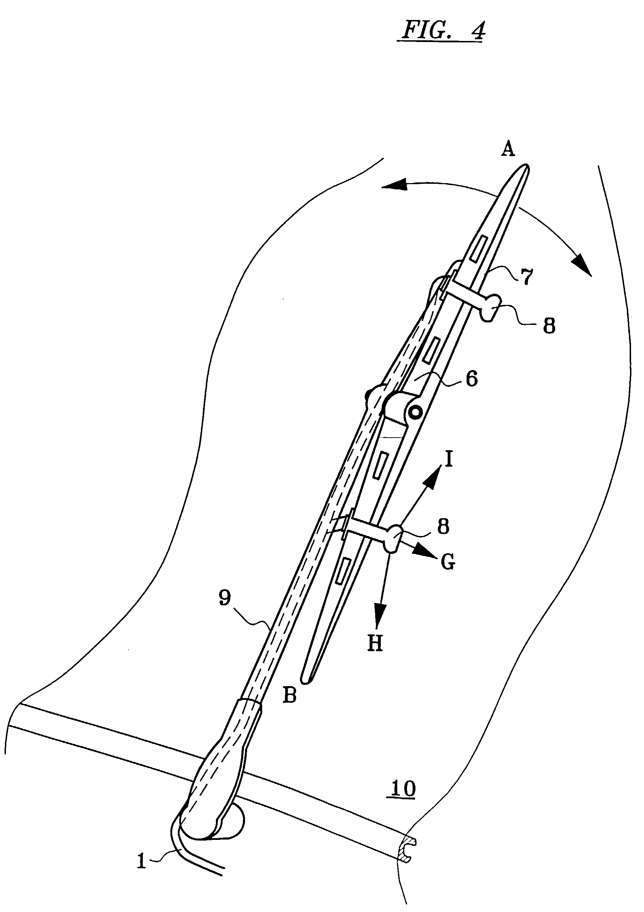

The invention is further illustrated in a non-limitative manner by figure 4, which shows a wiper assembly according to the invention during use for cleaning a solid surface (10). The wiper assembly comprises a movable wiper arm (9), a wiper blade (7) with a rearside (6) and, attached thereto, two fluid dispensing devices (8) according to Figure 3, comprising elements 2,3,4 and 5, said devices (8) being connected to a fluid pipe (1). It is further shown, that each fluid dispensing device disperses a beam of fluid towards the solid surface (10) in the three principal direction G, H and I according to Figure 1.

The wiper assembly of the invention is particularly useful to remove fluids from transparent surfaces in automotive applications such as the removal of fluid from an automotive windscreen and cleaning of said windscreen or the removal of fluid from an automotive headglass and cleaning of said headglass.

Consequently, the invention concerns also the use of the wiper assembly according to the invention for cleaning a transparent surface. Specifically the invention concerns the use of the wiper assembly according to the invention for cleaning a transparent surface in automotive applications.

## Claims

1. A wiper assembly capable of removing liquid from a solid surface (10), suitable for cleaning a windscreen of an automotive vehicle, said wiper assembly comprising a movable wiper blade (7), said wiper blade being attached to a wiper arm (9), connected to driving means, said wiper assembly further comprising at least one fluid dispensing device (8) comprising
(a) at least one means for projecting a beam of fluid at an angle (α) essentially out of the plane defined by the two end points (A,B) of the wiper blade (7) and the outlet (C) of said means for projecting, and
(b) at least one means (4) for deflecting the beam in a direction substantially perpendicular to the initial direction of the beam so as to be able to spread said beam, during operation, towards an area of the solid surface (10) extending approximately parallel to the wiper blade,
said fluid dispensing device (8) being attached to the wiper arm (9) or the wiper blade (7).

2. The wiper assembly according to claim 1, in which the angle (α) is at least 60°.

3. The wiper assembly according to claim 1, in which the angle (α) is about 90°.

4. The wiper assembly according to any of claims 1 to 3, in which the means (4) for deflecting said beam towards the solid surface (10) comprises two deflecting faces.

5. The wiper assembly according to claim 4 in which the angle (6) between the two deflecting faces is from about 80° to about 150°.

6. The wiper assembly according to any of claims 1 to 5, in which the distance between the outlet (C) and the point where the means (4) for deflecting said beam towards the solid surface is hit by said beam is from 1 to 50 mm.

7. The wiper assembly according to any of claims 1 to 6, in which the means for projecting is incorporated into the wiper arm or the rearside (6) of the wiper blade (7).

8. The wiper assembly according to any of claims 1 to 7 comprising more than one fluid dispensing device.

9. The wiper assembly according to any of claims 1 to 8 in which the fluid dispensing device (8) further comprises a heating element.

10. Use of the wiper assembly according to any of claims 1 to 9 for cleaning a transparent surface.
